# EUROPÄISCHE PATENTSCHRIFT

(11) **EP 2 987 039 B1**
(45) Veröffentlichungstag und Bekanntmachung des Hinweises auf die Patenterteilung: **23.09.2020**
(21) Anmeldenummer: 14718029.3
(22) Anmeldetag: 09.04.2014
(51) Int. Cl.: G05B 17/02

(54) **VERFAHREN UND VORRICHTUNG ZUR CO-SIMULATION VON ZWEI TEILSYSTEMEN**
METHOD AND DEVICE FOR CO-SIMULATING TWO SUBSYSTEMS
PROCÉDÉ ET DISPOSITIF DE CO-SIMULATION DE DEUX SYSTÈMES PARTIELS

(30) Priorität: 15.04.2013 AT 502602013
(43) Veröffentlichungstag der Anmeldung: 24.02.2016
(73) Patentinhaber: Virtual Vehicle Research GmbH, 8010 Graz (AT)
(72) Erfinder: ZEHETNER, Josef, A-8061 St. Radegund bei Graz (AT); PAULWEBER, Michael, A-8071 Hausmannstätten (AT); KOKAL, Helmut, A-8020 Graz (AT); BENEDIKT, Martin, A-8130 Frohnleiten (AT)
(74) Vertreter: Patentanwälte Pinter & Weiss OG
(86) Internationale Anmeldenummer: PCT/EP2014/057194
(87) Internationale Veröffentlichungsnummer: WO 2014/170188

(56) Entgegenhaltungen:
- EP-A1- 2 570 877
- AT-A2- 509 930
- LANG G ET AL: "Simulation des Aufwaermverhaltens von Verbrennungsmotor und Fahrzeug mittels Kopplung von Teilmodellen", WAERMEMANAGEMENT DES KRAFTFAHRZEUGS, X, XX, Nr. 5th, 1. Januar 2006 (2006-01-01), Seiten 38-53, XP009090231,

## Beschreibung

Die Erfindung betrifft ein Verfahren und eine Simulationsvorrichtung zur Simulation eines Gesamtsystems durch Co-Simulation von zwei Teilsystemen des Gesamtsystems in einer Simulationsvorrichtung, wobei die Teilsysteme wechselseitig durch Koppelgrößen gekoppelt sind.

Zur Simulation eines Gesamtsystems wird das Gesamtsystem oftmals in Teilsysteme unterteilt, die dann einzeln simuliert werden - man spricht dabei von verteilter Simulation oder Co-Simulation. Das passiert z.B. wenn die Teilsysteme in unterschiedlichen Simulationswerkzeugen simuliert werden, oder wenn paralleles Rechnen auf mehrere Rechenkernen angestrebt wird oder wenn eine Echtzeitsimulation (z.B. ein Hardware-in-the-Loop (HiL) System) an ein reales Automatisierungssystem für einen Prüfstand angebunden werden soll. Ein Teilsystem repräsentiert hierbei ein Teilmodell des zu simulierenden Systems inklusive des zugehörigen numerischen Lösungsalgorithmus. Die miteinander verknüpften Simulationen der Teilsysteme ergeben dann die Simulation des Gesamtsystems. In der Simulation wird in jedem Simulationsschritt ein bestimmter Betriebspunkt des Gesamtsystems bzw. damit zusammenhängende Betriebspunkte der Teilsysteme simuliert. Ein Betriebspunkt beschreibt hier das Verhalten des Gesamtsystems zu einem bestimmten Zeitpunkt. Bei der verteilten Simulation eines Gesamtsystems werden zu bestimmten, vorgegebenen Zeitpunkten sogenannte Koppelgrößen zwischen den Teilsystemen ausgetauscht und die Teilsysteme werden über definierte Zeitschritte, die sogenannten Koppelzeitschritte, unabhängig von anderen Teilsystemen gelöst. Am Ende eines Koppelzeitschritts wird zur Synchronisation der Teilsysteme ein Datenaustausch zwischen den Teilsystemen durchgeführt.

Bei wechselseitigen Abhängigkeiten von Teilsystemen, wenn z.B. ein erstes Teilsystem einen Ausgang eines zweiten Teilsystems als Eingang benötigt, wobei das zweite Teilsystem als Eingang eines Ausgang des ersten Teilsystems benötigt, sind nicht alle benötigten Koppelgrößen zu Beginn des Koppelzeitschritts bekannt und müssen über Extrapolation geschätzt werden. Durch die Extrapolation wird das zeitliche Verhalten eines oder mehrerer Systeme (Teilsysteme) vorhergesagt.

Die Kopplung von Teilmodellen der Teilsysteme erfolgt bei der Co-Simulation typischerweise basierend auf signalbasierter, polynomialer Extrapolation der Koppelgrößen. Meist werden hierzu Verfahren nullter Ordnung, selten Verfahren höherer Ordnung (1-ter bzw. 2.ter) verwendet. Anhand der signalbasierten Extrapolation wird das Ausgangssignal y als Funktion des Eingangssignals x berechnet, also y=f(x) - man spricht dabei auch von single-input, single-output (SISO). Durch die Extrapolation relevanter Koppelgrößen wird ein sogenannter Koppelfehler eingeführt, der direkten (negativen) Einfluss auf die Qualität der Ergebnisse der (Co-)Simulation hat. Da eine Extrapolation über Koppelzeitschritte erfolgt, entspricht der eingebrachte Fehler einem "lokalen Diskretisierungsfehler". Unstetigkeiten an den Koppelzeitpunkten (durch die stückweise Extrapolation) haben dabei auch negativen Einfluss auf die numerische Lösung der Teilsysteme. Um den Koppelfehler klein zu halten, müssen Abtastschritte bzw. Austauschintervalle klein gehalten werden, was zu hohen Rechenzeiten führt und somit nicht wünschenswert ist. Der Koppelfehler verursacht aber auch eine Verzerrung des Koppelsignals und führt zu einer immanenten Zeitverschiebung des Koppelsignals (virtuelle Totzeit), die negativen Einfluss auf das Schwingverhalten von closed-loop Systemen (z.B. ein Regelkreis) haben. Es entstehen durch den Austausch der Koppelgrößen aber auch zusätzliche, "reale" Totzeiten durch die Verwendung von Kommunikationssystemen, z.B. Austausch von Daten über Bussysteme wie FlexRay oder CAN. Diese realen Totzeiten sind typischerweise wesentlich größer, als die virtuellen Totzeiten durch die Kopplung.

In der EP 2 442 248 A1 und AT 509 930 A2 sind z.B. signalbasierte Kopplungsmethodiken für Co-Simulationen mit Fehlerkorrektur und Koppelzeitschrittsteuerung beschrieben. Damit können die Extrapolationsfehler durch eine Methode zur Fehler-Kompensation deutlich reduziert werden. Weiters können damit Totzeiten (virtuelle und reale), welche den Koppelzeitschritt nicht wesentlich überschreiten, kompensiert werden.

Die EP 2 570 877 A1 zeigt eine Anpassung von Parametern eines mathematischen Modells einer Gasturbine.

Problem bei signalbasierten Extrapolationsverfahren ist, dass sie bei der Extrapolation über lange Zeitintervalle, d.h. über mehrere Koppelzeitschritte hinweg, versagen. Bei der Echtzeitsimulation des Gesamtsystems tritt dieser Fall auf, da es hier zu typischerweise großen Totzeiten (mehrere Koppelzeitschritte) auf Grund von Messung (A/D Wandlung), Signalaufbereitung, Datenübertragung über Kommunikationsmedien usw. kommt. Bei der Echtzeitsimulation müssen die Koppelgrößen zu fest vorgegebenen Zeitpunkten (Koppelzeitschritt) verfügbar sein, da ansonsten die Echtzeitsimulation mit einem Fehler abbricht. Eine Echtzeitsimulation ist z.B. notwendig, wenn zumindest ein Echtzeitsystem gekoppelt ist (mit einem weiteren Echtzeitsystem oder einem Nicht-Echtzeitsystem) oder wenn Tasks auf einem Echtzeitsystem gekoppelt sind.

Es ist daher eine Aufgabe der gegenständliche Erfindung, die Extrapolation von Koppelgrößen in der Co-Simulation zu verbessern, insbesondere so zu verbessern, dass eine Extrapolation auch über lange Zeitintervalle, d.h. auch über mehrere Koppelzeitschritte, möglich ist, sodass auch eine Echtzeit-Co-Simulation möglich wird.

Diese Aufgabe wird durch ein Verfahren gemäß Anspruch 1, und eine zugehörige Simulationsvorrichtung gemäß Anspruch 6, gelöst, bei dem in der Simulationsvorrichtung durch eine Extrapolationseinheit aus Eingangsgrößen und/oder Messgrößen der Teilsysteme anhand einer Methode der datenbasierten Modellidentifikation ein im aktuellen Betriebspunkt des Gesamtsystems gültiges mathematisches Modell für beide Teilsysteme ermittelt wird und aus diesem Modell die Koppelgrößen für einen nachfolgenden Koppelzeitschritt extrapoliert und den Teilsystemen zur Verfügung gestellt werden. Da durch das Modell das Zeitverhalten der Teilsysteme für einen gewissen Zeitbereich (Betriebspunkt) sehr gut bekannt ist, kann damit auch über mehrere Koppelzeitschritte hinweg extrapoliert werden, was eine Echtzeit-Co-Simulation ermöglicht. Das ermöglicht aber auch den fehlerfreien Weiterbetrieb von Echtzeitsystemen, auch wenn Messwerte über mehrere Koppelzeitschritte ausfallen, da diese durch die modellbasierte Extrapolation zuverlässig bestimmt werden können. Zusätzlich können durch die modellbasierte Extrapolation auch verrauschte Signale verarbeitet werden.

Die reale und die virtuelle Totzeit kann sehr einfach kompensiert werden, indem durch die Extrapolation aus dem Modell um die Totzeit weiter in der Zukunft liegende Koppelgrößen berechnet werden.

Insbesondere bei Echtzeitsystemen ist eine Fehlerdiagnose wichtig, um das Echtzeitsystem gegebenenfalls in einen sicheren Zustand bringen zu können. Das wird ermöglicht, wenn bei der Extrapolation ein Koppelfehler ermittelt wird und in Abhängigkeit davon Verfahrensschritte zur Behandlung des Koppelfehlers eingeleitet werden.

Die Genauigkeit der Bestimmung der Koppelgrößen kann verbessert werden, wenn bei der Extrapolation zusätzlich Verfahren zur Fehlerkompensation eingesetzt werden.

Insbesondere zu Beginn der Simulation kann es sein, dass noch kein ausreichend genaues Modell verfügbar ist. Diese Zeitspanne kann durch eine signalbasierte Kopplung zur Ermittlung der Koppelgrößen auf einfache Weise überbrückt werden.

Bei der Verwendung eines Echtzeitbussystems zwischen einem Teilsystem und der Extrapolationseinheit kann die Genauigkeit der Extrapolation erhöht werden, da die Kommunikationstotzeit genau ermittelt und daher zielgerichteter kompensiert werden kann.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine signalbasierte Extrapolation der Koppelgrößen nach dem Stand der Technik,
Fig.2 die erfindungsgemäße, modellbasierte Extrapolation der Koppelgrößen,
Fig.3 einen beispielhaften Verfahrensablauf zur Extrapolation der Koppelgrößen,
Fig.4 ein Beispiel der Co-Simulation eines Gesamtsystems und
Fig.5 eine Simulationsvorrichtung zur Umsetzung des Verfahrens zur Extrapolation der Koppelgrößen.

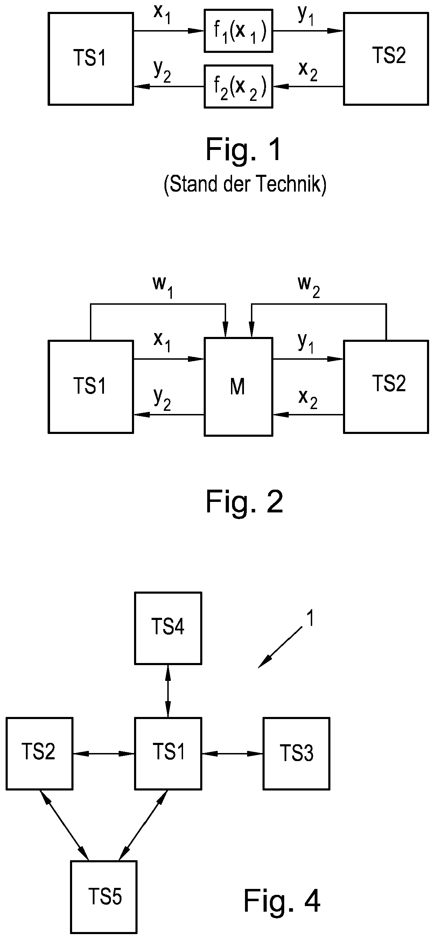

In Fig.1 ist zur Erläuterung der signalbasierte Ansatz zur Extrapolation der Koppelgrößen aus dem Stand der Technik dargestellt. Dabei sind zwei Teilsysteme TS1, TS2 wechselseitig gekoppelt. Die Funktionen f₁, f2 extrapolieren die Koppelgrößen y₁, y₂ aus den Eingangsgrößen x₁, x₂ durch polynomialer Extrapolation, z.B. zero order hold (ZOH), first order hold (FOH) oder second order hold (SOH), also y₁=f₁(x₁(t), t), y₂=f₂(x₂(t),t).

Im nachfolgenden Ausführungsbeispiel werden jeweils zwei Eingangs-, Koppel- und Messgrößen genannt, natürlich umfasst aber die Erfindung auch eine jeweils beliebige andere Anzahl derartiger Größen.

Erfindungsgemäß wird nun ein modellbasierter Ansatz gewählt, bei dem zur Extrapolation der Koppelgrößen y₁, y₂ ein mathematisches Modell M der Teilsysteme TS1, TS2 verwendet wird, wie schematisch in Fig.2 dargestellt. Das Modell M wird dabei aus den Eingangsgrößen x₁, x₂ und/oder aus Messgrößen w₁, w₂ unter Berücksichtigung sowohl der aktuellen als auch von vergangenen Zeitwerten ermittelt. Unter Eingangsgrößen werden allgemein Größen verstanden, die beispielsweise auch zwischen Simulationsmodellen ausgetauschten Werten entsprechen können. Messgrößen können beispielsweise von Sensoren beliebiger Art stammen und können dementsprechend mit Rauschen belegt sein.

Aus dem Modell M folgt für die Koppelgrößen y₁=f₁(x₁(t), x₂(t), t), y₂=f₂(x₁(t), x₂(t), t). Im Fall der reinen Verwendung von Messgrößen folgt im dargestellten Ausführungsbeispiel aus dem Modell M für die Koppelgrößen y₁=f₁(w₁(t), w₂(t), t), y₂=f₂(w₁(t), w₂(t), t). Bei Verwendung von Eingangs- und Messgrößen gemäß der oben angeführten Definition folgt aus dem Modell M für die Koppelgrößen y₁=f₁(x₁(t), x₂(t), w₁(t), w₂(t), t), y₂=f₂(x₁(t), x₂(t), w₁(t), w₂(t), t).

Es liegt damit ein multi-input, multi-output (MIMO) System vor. Das Modell M beinhaltet ein identifiziertes Modell der Teilsysteme TS1, TS2, das nur lokal, also nur kurzfristig für den aktuellen Betriebspunkt des Gesamtsystems, gültig ist. Durch diese modellbasierte Extrapolation wird die Extrapolation adaptiv an das Systemverhalten bzw. die Systemlösung angepasst. Durch die modellbasierte Extrapolation können aber auch verrauschte Signale (Koppelgrößen y₁, y₂, Eingangsgrößen x₁, x₂, Messgrößen w₁, w₂) verarbeitet werden, weil die Extrapolation basierend auf einem Modell M erfolgt und nicht auf den verrauschten Messgrößen selbst beruht, was bei signalbasierter Extrapolation nicht möglich ist.

Zur Ermittlung des Modells M wird auf hinlänglich bekannte Methoden der datenbasierten Modellidentifikation zurückgegriffen. Dabei wird das Modell aus aktuellen und vergangenen Eingangsgrößen x₁, x₂ und/oder Messwerten w₁, w₂ der Teilsysteme TS1, TS2 ermittelt. Solche Methoden sind z.B. Rekursives Least Squares Verfahren (RLS, R Extended LS), (Extended) Kalman Filter Methoden, Rekursive Instrumental Variable Methoden, Rekursive Subspace Identifikation, Projection Algorithmus, Stochastic Gradient Algorithmus, Rekursive Pseudolinear Regressions, Rekursive Prediction Error Methoden, Beobachter basierte Identifkationsmethoden (Sliding Mode, Unknown Input Observer, ...), Fourier Analysis, Correlation Analysis. Mit solchen Methoden werden die Parameter des Modells M anhand des aktuellen Betriebspunktes des Gesamtsystems bestimmt und laufend optimiert. Dazu kann die Modellstruktur beliebig vorgegeben werden, z.B. ein linear, zeitinvariantes System 2. Ordnung, mit zwei Ein- und Ausgängen. Als Messgrößen w₁, w₂ werden vorteilhaft von den Teilsystemen angebotene Messgrößen w₁, w₂ verwendet, wobei aktuelle und vergangene Messgrößen w₁, w₂ verwendet werden können.

Ein initiales Modell kann am Beginn der Simulation auch vorab aus bekannten Größen oder externem Wissen ermittelt oder vorgegeben werden. Um die initialen Modellparameter zu ermitteln, können z.B. interne Anfangszustände für die Teilsysteme und für das geschätzte Modell mittels inverser Modelle rückgerechnet werden, oder die internen Modellzustände mittels eines einfacheren Verfahrens berechnet werden, bis das modellbasierte Verfahren eingeschwungen ist, oder es können korrekte Anfangswerte für die Eingangssignale eingestellt werden. Es kann aber prinzipiell ein beliebiges initiales Modell verwendet werden. Auch ist es denkbar, eine signalbasierte Kopplung vorzusehen, bis das geschätzte Modell verfügbar bzw. gültig ist.

Weil durch das Modell M das Zeitverhalten der Teilsysteme TS1 und TS2 für einen gewissen Zeitbereich (Betriebspunkt) sehr gut bekannt ist, können auch allfällige Totzeiten kompensiert werden. Somit kann das Verhalten des jeweils anderen Teilsystems TS1, TS2 vorhergesagt werden, ohne das die dynamische Antwort des Systems abgewartet werden muss.

Durch die Verwendung eines Modells M zur Bestimmung der Koppelgrößen y₁, y₂, kann ein Echtzeitsystem auch dann fehlerfrei weiterbetrieben werden (zumindest temporär), wenn Messgrößen w₁, w₂ über mehrere Koppelzeitschritte ausfallen, da diese durch die modellbasierte Extrapolation zuverlässig bestimmt werden können.

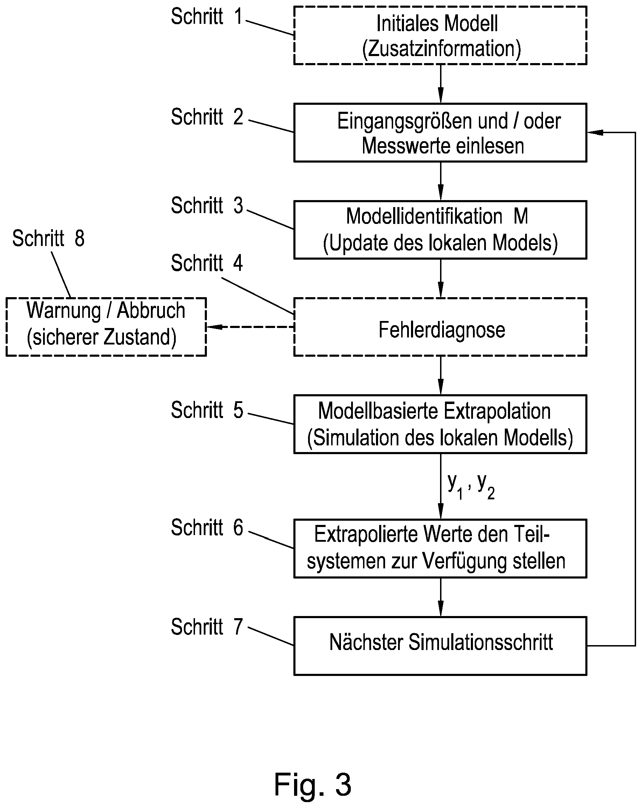

Die Co-Simulation zweier Teilsysteme TS1, TS2 kann dann wie in Fig.3 dargestellt ablaufen. In einem ersten Schritt gemäß dem beschriebenen Ausführungsbeispiel wird ein initiales Modell vorgegeben oder ermittelt. Dabei handelt es sich um einen optionalen Schritt. Danach werden als zweiter Schritt die benötigten Messgrößen w₁, w₂ und/oder Eingangsgrößen x₁, x₂ eingelesen und daraus in einem dritten Schritt mittels einer datenbasierten Methode der Modellidentifikation die lokal, also innerhalb des Simulationsschrittes, gültigen Parameter des Modells M bestimmt. Die Parameter können auch über mehrere Simulationsschritte gültig bleiben, beispielsweise wenn aus irgendwelchen Gründen keine neuen Messgrößen w₁, w₂ und/oder Eingangsgrößen x₁, x₂ eingelesen werden können. Dementsprechend würden die Schritte 2 und 3 entfallen.

Dabei kann optional auch der Koppelfehler, z.B. ein Extrapolationsfehler, eine Totzeit, Datenausfall, etc., ermittelt werden (Schritt 4) und basierend darauf können Verfahrensschritte eingeleitet werden, wie z.B. Abbruch der Simulation, System in sicheren Zustand überführen, Ausgabe einer Warnung (Schritt 8).

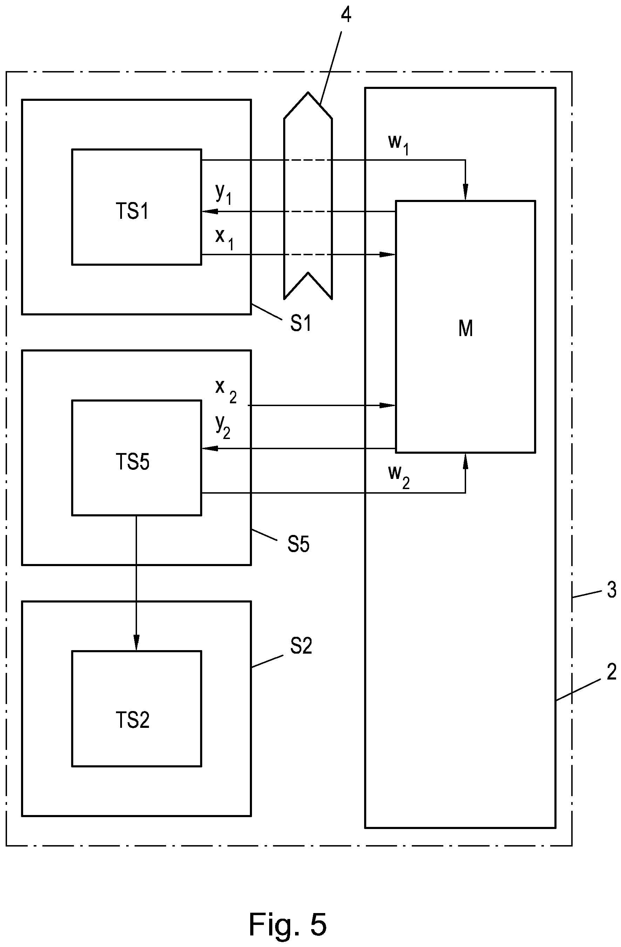

Durch die modellbasierte Extrapolation können die realen und virtuellen, im geschlossenen System auftretenden Totzeiten kompensiert werden. Die reale Totzeit hervorgerufen durch die Kommunikation bzw. den Signalaustausch, z.B. über ein Bussystem, aber auch durch Rechenzeiten, Zeiten für die Messung und Aufbereitung der Signale, kann kompensiert werden, indem mit dem Modell M weiter in die Zukunft geschätzt wird. Durch den Einsatz von Echtzeitbussystemen 4 (angedeutet in Fig.5), also zeitgesteuerten Bussystemen, bzw. allgemein von Systemen die zusätzlich zum Signal eine Zeitinformation übermitteln, kann die Genauigkeit der Extrapolation erhöht werden, da die Kommunikationstotzeit genau ermittelt werden kann, z.B. durch Abschätzung der Totzeit basierend auf den Informationen aus dem Echtzeitbussystem 4 oder durch Auswertung des geschätzten Modells. Die virtuelle Totzeit, hervorgerufen durch zeitliche Verschiebungen durch die Abtastung, kann implizit durch die Verwendung der modellbasierten Extrapolation kompensiert werden. Durch die erfindungsgemäße modellbasierte Extrapolation können somit alle Totzeiten kompensiert werden, was vor allem beim Einsatz mit Echtzeitsystemen zu einer deutlichen Verbesserung des Simulationsverhaltens führt.

Aus dem lokalen Modell M werden in einem fünften Schritt die Koppelgrößen y₁, y₂ berechnet, die dann in einem sechsten Schritt den Teilsystemen TS1, TS2 für die Co-Simulation im nächsten Simulationsschritt zur Verfügung gestellt werden, womit das Verfahren wieder beim zweiten Schritt fortsetzt. Die Koppelgrößen y₁, y₂ können in den Teilsystemen TS1, TS2 aber auch anderweitig weiterverarbeitet werden, z.B. wenn ein Teilsystem TS1, TS2 nicht simuliert wird, sondern real aufgebaut ist.

Bei der Ermittlung der Koppelgrößen y₁, y₂ können auch Methoden zur zusätzlichen Fehlerkompensation angewendet werden, z.B. eine Methode wie in der EP 2 442 248 A1 beschrieben. Damit ließe sich die Genauigkeit der ermittelten Koppelgrößen y₁, y₂ noch weiter erhöhen.

In Fig.4 ist die Co-Simulation eines Gesamtsystems 1 am Beispiel eines Hybridfahrzeugs schematisch dargestellt. Dabei stellt das Teilsystem TS1 z.B. eine elektrische Maschine dar, das Teilsystem TS2 eine Verbrennungskraftmaschine, das Teilsystem TS3 einen Antriebsstrang, das Teilsystem TS4 einen elektrischen Energiespeicher und das Teilsystem TS5 ein Hybridsteuergerät. Die Verbindungen dazwischen beschreiben die Verbindungen zwischen den Teilsystemen TS. Dabei kann das Hybridsteuergerät z.B. in einer HiL-Hardware real aufgebaut sein und die anderen Teilsysteme TS1 bis TS4 laufen als Simulation auf geeigneten Simulationsplattformen, wie z.B. dSpace oder Matlab, womit eine Echtzeit-Co-Simulation notwendig wird. Es können aber auch zusätzlich andere Teilsysteme als reale Hardware aufgebaut sein, z.B. der Verbrennungsmotor auf einem Motorprüfstand.

In Fig.5 ist beispielhaft die Simulationsvorrichtung 3 für einen Teil der Co-Simulation des Gesamtsystems 1 dargestellt. Jedes Teilsystem TSn wird hier in einer eigenen Simulationsumgebung (Hardware und mit Software zur Simulation des Teilmodells des Teilsystems mit dem vorgesehenen Lösungsalgorithmus) Sn simuliert. Selbstverständlich können auch mehrere oder alle Teilsysteme in einer Simulationsumgebung simuliert werden. Hier ist die Simulationsumgebung S5 z.B. ein HiL-System mit entsprechender Hardware und Software. Die Simulationsumgebungen S1 und S2 sind z.B. auf geeigneten Computern mit entsprechender Software, wie z.B. Simulink von Mathworks oder Adams von MSC, realisiert. Die Teilsysteme TS1 und TS5 sind hier wechselseitig voneinander abhängig, sodass die Abhängigkeit für die Co-Simulation mittels der Koppelgrößen y₁, y₂ wie oben beschrieben aufgelöst werden muss. Dazu ist eine Extrapolationseinheit 2 vorgesehen, die z.B. als Computerhardware mit geeigneter Software und den notwendigen Algorithmen, z.B. für die Modellidentifikation, ausgeführt ist. Die Extrapolationseinheit 2 erhält die Eingangsgrößen x₁, x₂ und Messgrößen w₁, w₂ von den Teilsystemen TS1, TS5 und identifiziert daraus für jeden Simulationsschritt ein lokal gültiges Modell M. Aus dem Modell M werden dann gleichzeitig die Koppelgrößen y₁, y₂ berechnet und den Teilsystemen TS1, TS5 zur Verfügung gestellt.

## Patentansprüche

1. Verfahren zur Simulation eines Gesamtsystems durch Co-Simulation von zwei Teilsystemen (TS1, TS2) des Gesamtsystems (1) in einer Simulationsvorrichtung (3), wobei die Teilsysteme (TS1, TS2) wechselseitig durch Koppelgrößen (y₁, y₂) gekoppelt sind, **dadurch gekennzeichnet, dass** in der Simulationsvorrichtung (3) durch eine Extrapolationseinheit (2) aus Eingangsgrößen (x₁, x₂) und/oder Messgrößen (w₁, w₂) der Teilsysteme (TS1, TS2) anhand einer Methode der datenbasierten Modellidentifikation ein im aktuellen Betriebspunkt des Gesamtsystems (1) gültiges mathematisches Modell (M) für beide Teilsysteme (TS1, TS2) identifiziert wird und aus diesem Modell (M) die Koppelgrößen (y₁, y₂) für einen nachfolgenden Koppelzeitschritt extrapoliert und den Teilsystemen (TS1, TS2) zur Verfügung gestellt werden.

2. Verfahren nach Anspruch 1, **dadurch gekennzeichnet, dass** um die reale und virtuelle Totzeit weiter in der Zukunft liegende Koppelgrößen (y₁, y₂) durch die Extrapolation aus dem Modell (M) berechnet werden, womit die reale und die virtuelle Totzeit kompensiert wird.

3. Verfahren nach Anspruch 1, **dadurch gekennzeichnet, dass** bei der Extrapolation ein Koppelfehler identifiziert wird und in Abhängigkeit davon Verfahrensschritte zur Behandlung des Koppelfehlers eingeleitet werden.

4. Verfahren nach Anspruch 1, **dadurch gekennzeichnet, dass** bei der Extrapolation Verfahren zur Fehlerkompensation eingesetzt werden.

5. Verfahren nach Anspruch 1, **dadurch gekennzeichnet, dass** eine signalbasierte Kopplung zur Ermittlung der Koppelgrößen (y₁, y₂) verwendet wird, bis das identifizierte Modell (M) verfügbar ist.

6. Simulationsvorrichtung zur Simulation eines Gesamtsystems durch Co-Simulation von zumindest zwei Teilsystemen (TS1, TS2) des Gesamtsystems (1), wobei die Teilsysteme (TS1, TS2) wechselseitig durch Koppelgrößen (y₁, y₂) gekoppelt sind, **dadurch gekennzeichnet, dass** zumindest eine Extrapolationseinheit (2) dazu gestaltet ist, die Eingangsgrößen (x₁, x₂) und/oder Messgrößen (w₁, w₂) der Teilsysteme (TS1, TS2) zu erhalten und daraus anhand einer Methode der datenbasierten Modellidentifikation ein im aktuellen Betriebspunkt des Gesamtsystems (1) gültiges mathematisches Modell (M) für beide Teilsysteme zu identifizieren, um mit dem Modell (M) die Koppelgrößen zu extrapolieren.

7. Simulationsvorrichtung nach Anspruch 6, **dadurch gekennzeichnet, dass** zumindest ein Teilsystem (TS1, TS2) und zumindest eine Extrapolationseinheit (2) durch zumindest ein Echtzeitbussystem (4) verbunden ist.

## Claims

1. A method for simulation of an overall system (1) by co-simulating two subsystems (TS1, TS2) of the overall system (1) in a simulation device (3), wherein the subsystems (TS1, TS2) are reciprocally coupled by way of coupling variables (y₁, y₂), **characterized in that** in the simulation device (3) a mathematical model (M) of the subsystems (TS1, TS2) which is valid at the current operating point of the overall system (1) is identified from input variables (x₁, x₂) and/or measured variables (w₁, w₂) of the subsystems (TS1, TS2) by an extrapolation device (2) by a method of data-based model identification and, from this model (M), the coupling variables (y₁, y₂) are extrapolated for a subsequent coupling time step and made available to the subsystems (TS1, TS2).

2. The method according to claim 1, **characterized in that** for coupling variables (y₁, y₂), that lie further ahead in the future by the dead time, are calculated from the model (M) by way of the extrapolation, wherein the real and the virtual dead time is compensated.

3. The method according to claim 1, **characterized in that** a coupling error is identified in the extrapolation, and method steps for treating the coupling error are initiated in dependency thereof.

4. The method according to claim 1, **characterized in that** methods for error compensation are used in the extrapolation.

5. The method according to claim 1, **characterized in that** signal-based coupling is used to ascertain the coupling variables (y₁, y₂) until the identified model (M) is available.

6. A simulation device for simulation of an overall system by co-simulation of at least two subsystems (TS1, TS2) of the overall system (1), wherein the subsystems (TS1, TS2) are reciprocally coupled by way of coupling variables (y₁, y₂), **characterized in that** at least one extrapolation unit (2) is configured to receive input variables (x₁, x₂) and/or measured variables (w₁, w₂) of the subsystems (TS1, TS2) and, based thereon, by a method of data-based model identification, identify a mathematical model (M) for both subsystems, which is valid at the current operating point of the overall system (1), in order to extrapolate the coupling variables using the model (M).

7. The simulation device according to claim 6, **characterized in that** at least one subsystem (TS1, TS2) and at least one extrapolation unit (2) are connected by at least one real-time bus system (4).

## Revendications

1. Procédé de simulation d'un système global par co-simulation de deux systèmes partiels (TS1, TS2) du système global (1) dans un dispositif de simulation (3), dans lequel les systèmes partiels (TS1, TS2) sont mutuellement couplés par des grandeurs de couplage (y₁, y₂), **caractérisé en ce que,** dans le dispositif de simulation (3), une unité d'extrapolation (2) identifie, à partir de grandeurs d'entrée (x₁, x₂) et/ou de grandeurs de mesure (w₁, w₂) des systèmes partiels (TS1, TS2), à l'aide d'une méthode d'identification de modèle basée sur les données, un modèle mathématique (M) valide au point de fonctionnement instantané du système global (1) pour les deux systèmes partiels (TS1, TS2), et **en ce que** les grandeurs de couplage (y₁, y₂) sont extrapolées à partir dudit modèle (M) pour un intervalle de temps de couplage suivant et sont transmises aux systèmes partiels (TS1, TS2).

2. Procédé selon la revendication 1, **caractérisé en ce que** des grandeurs de couplage (y₁, y₂) se trouvant plus loin dans le futur autour du temps mort réel et virtuel sont calculées par extrapolation à partir du modèle (M), le temps mort réel et le temps mort virtuel étant ainsi compensés.

3. Procédé selon la revendication 1, **caractérisé en ce que,** lors de l'extrapolation, une erreur de couplage est identifiée et **en ce que**, en fonction de celle-ci, des étapes de traitement de l'erreur de couplage sont mises en œuvre.

4. Procédé selon la revendication 1, **caractérisé en ce que** des procédés de compensation d'erreurs sont utilisés lors de l'extrapolation.

5. Procédé selon la revendication 1, **caractérisé en ce qu'un** couplage basé sur les signaux est utilisé pour déterminer les grandeurs de couplage (y₁, y₂) jusqu'à ce que le modèle (M) identifié soit disponible.

6. Dispositif de simulation pour la simulation d'un système global par co-simulation d'au moins deux systèmes partiels (TS1, TS2) du système global (1), dans lequel les systèmes partiels (TS1, TS2) sont couplés mutuellement par des grandeurs de couplage (y₁, y₂), **caractérisé en ce qu'**au moins une unité d'extrapolation (2) est conçue pour obtenir les grandeurs d'entrée (x₁, x₂) et/ou les grandeurs de mesure (w₁, w₂) des systèmes partiels (TS1, TS2) et pour identifier à partir de celles-ci, à l'aide d'une méthode d'identification de modèle basée sur les données, un modèle mathématique (M) valide au point de fonctionnement instantané du système global (1) pour les deux systèmes partiels, afin d'extrapoler les grandeurs de couplage à l'aide du modèle (M).

7. Dispositif de simulation selon la revendication 6, **caractérisé en ce qu'au** moins un système partiel (TS1, TS2) et au moins une unité d'extrapolation (2) sont reliés par au moins un système de bus en temps réel (4).
